# EUROPÄISCHE PATENTANMELDUNG

(11) **EP 1 001 645 A2**
(43) Veröffentlichungstag der Anmeldung: **17.05.2000**
(21) Anmeldenummer: 99121723.3
(22) Anmeldetag: 03.11.1999
(51) Int. Cl.: H04Q 11/04

(54) **Verfahren, Telekommunikationsendgerät und Telekommunikationszentrale zur bidirektionalen Übertragung von Daten auf einer Übertragungsstrecke**

(30) Priorität: 12.11.1998 DE 19852121
(71) Anmelder: ROBERT BOSCH GMBH, 70442 Stuttgart (DE)
(72) Erfinder: Halfmann, Joerg, 68163 Mannheim (DE); Haack, Reiner, 55452 Ruemmelsheim (DE)

(57) **Zusammenfassung**

Verfahren, Telekommunikationsendgerät (10) und Telekommunikationszentrale (30) zur bidirektionalen Übertragung von Daten auf einer Übertragungsstrecke (20), (23, 27, 40, 43, 47) zwischen wenigstens einem Telekommunikationsendgerät (10) und wenigstens einer ersten Datenverarbeitungsanlage (50) über eine Telekommunikationszentrale (30) zum Betrieb von wenigstens einer Anwendung, wobei zwischen dem Telekommunikationsendgerät (10) und der Telekommunikationszentrale (30) die Datenübertragung ausschließlich über einen Signalisierungskanal (24) erfolgt. Dadurch wird eine transparente und dienstunabhängige Verbindung zwischen dem Telekommunikationsendgerät (10) und der ersten Datenverarbeitungsanlage (50) ermöglicht.

## Beschreibung

### Stand der Technik

Die Erfindung geht aus von einem Verfahren zur bidirektionalen Übertragung, von einem Telekommunikationsendgerät und von einer Telekommunikationszentrale nach der Gattung der unabhängigen Patentansprüche

Aus den TN-Nachrichten 1986, Heft 89, Seiten 13ff ist ein Telekommunikationssystem bekannt, das den Aufbau einer Nutzkanalverbindung über einen B-Kanal einer ISDN-Schnittstelle (Schnittstelle nach dem integratedservices-digital-network-Standard) zwischen einem Telekommunikationsendgerät und einer Datenverarbeitungsanlage erlaubt. Wenn ein Verbindung zwischen dem Telekommunikationsendgerät und der Datenverarbeitungsanlage aufgebaut werden soll, wird der D-Kanal einer ISDN-Verbindung als Signalisierungskanal zum Verbindungsaufbau und der B-Kanal zur Übertragung beispielsweise von Nutzdaten zwischen den beiden Geräten benutzt.

### Vorteile der Erfindung

Das erfindungsgemäße Verfahren, das erfindungsgemäße Telekommunikationsendgerät und die erfindungsgemäße Telekommunikationszentrale mit den Merkmalen der unabhängigen Patentansprüche haben demgegenüber den Vorteil, daß eine transparente Ende-zu-Ende-Verbindung zur Datenübertragung zwischen dem Telekommunikationsendgerät und der Datenverarbeitungsanlage unter ausschließlicher Benutzung eines Signalisierungskanals zwischen dem Telekommunikationsendgerät und der Telekommunikationszentrale ermöglicht wird, so daß die Übertragung von Daten zwischen dem Telekommunikationsendgerät und der Datenverarbeitungsanlage ohne die Belegung eines Nutzkanals zwischen dem Telekommunikationsendgerät und der Telekommunikationszentrale betreibbar ist. Die vorhandenen Nutzkanäle sind somit frei verfügbar für an der Telekommunikationsschnittstelle des Telekommunikationsendgerätes vorgesehene Dienste, insbesondere Sprachverbindungen zu Teilnehmern eines Telekommunikationsnetzes, und dies unabhängig von dem zwischen dem Telekommunikationsendgerät und der Datenverarbeitungsanlage möglicherweise gleichzeitig ablaufenden Datenaustausch.
Der Betrieb einer Anwendung über eine solche transparente Verbindung zwischen dem Telekommunikationsendgerät und der Datenverarbeitungsanlage ist somit ohne eine Belegung von Nutzkanalressourcen der Telekommunikationsschnittstelle des Telekommunikationsendgerätes bzw. der Telekommunikationsschnittstelle der Telekommunikationszentrale möglich.

Weiterhin ist es von Vorteil, mehrere Telekommunikationsendgeräte und die Datenverarbeitungsanlage an die Telekommunikationszentrale zum Betrieb der Anwendung anzuschließen. Dadurch sind beispielsweise anwendungsspezifische Daten in einem Speicher in der Datenverarbeitungsanlage speicherbar und verwendbar oder Anwendungen zur Programmierung eines Telekommunikationsendgerätes zentral für mehrere Telekommunikationsendgeräte durchführbar.

Durch die in den Unteransprüchen aufgeführten Maßnahmen sind vorteilhafte Weiterbildungen und Verbesserungen des Verfahrens, des Telekommunikationsendgerätes und der Telekommunikationszentrale gemäß den unabhängigen Patentansprüchen möglich.

Es ist von Vorteil, daß die Telekommunikationszentrale die zwischen dem Telekommunikationsendgerät und der Datenverarbeitungsanlage ausgetauschten Daten derart behandelt, daß für die Übertragungsrichtung vom Telekommunikationsendgerät zur Datenverarbeitungsanlage und/oder für die Übertragungsrichtung von der Datenverarbeitungsanlage zum Telekommunikationsendgerät ausschließlich eine Formatumwandlung der Daten vorgenommen wird, so daß von der Telekommunkationszentrale keine Vermittlungsaufgaben übernommen werden müssen, wodurch eine transparente Verbindung zur Übertragung von Daten zwischen dem Telekommunikationsendgerät und der Datenverarbeitungsanlage zum Betrieb einer Anwendung ermöglicht wird.

### Zeichnung

Ein Ausführungsbeispiel der Erfindung ist in der Zeichnung dargestellt und in der nachfolgenden Beschreibung näher erläutert. Es zeigen
Figur 1 ein über eine Telekommunikationszentrale mit einer Datenverarbeitungsanlage verbundenes erstes Telekommunikationsendgerät,
Figur 2 eine Telekommunkationszentrale mit mehreren angeschlossenen Telekommunikationsendgeräten und Datenverarbeitungsanlagen,
Figur 3 einen Ablaufplan zum Betrieb einer Anwendung und
Figur 4 einen Ablaufplan zum Verbindungsaufbau zwischen zwei an die Telekommunikationszentrale angeschlossene Telekommunikationsendgeräte bzw. zwischen einem Telekommunikationsendgerät und einer Datenverarbeitungsanlage.

### Beschreibung des Ausführungsbeispiels

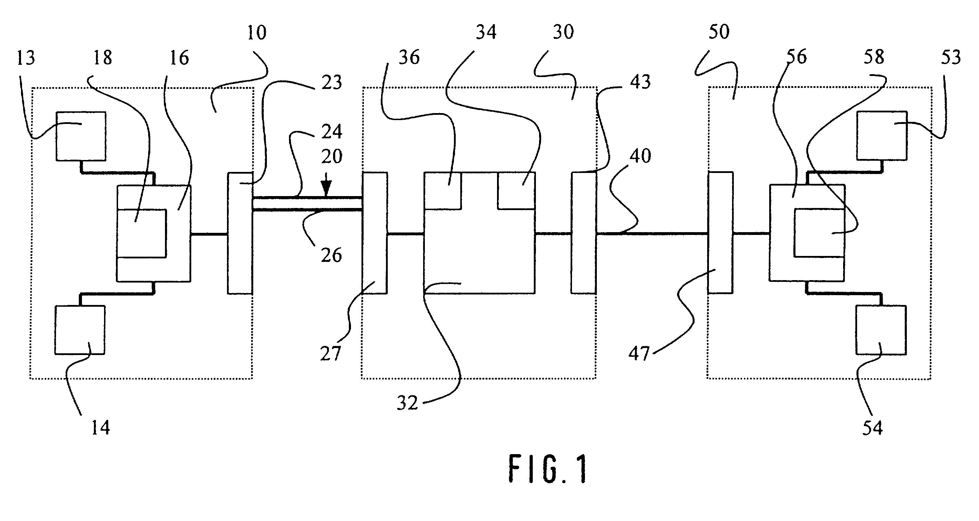

In Figur 1 ist ein erstes Telekommunikationsendgerät 10 dargestellt, welches mittels einer ersten Telekommunikationsverbindung 20 mit einer Telekommunikationszentrale 30 verbunden ist. Die Telekommunikationszentrale 30 ist mit einer ersten Datenverarbeitungsanlage 50 über eine erste Datenverbindung 40 verbunden.
Das erste Telekommunikationsendgerät 10 umfaßt wenigstens eine erste Eingabeeinrichtung 13 und wenigstens eine erste Ausgabeeinrichtung 14, die jeweils mit einer ersten Steuereinrichtung 16 verbunden sind, wobei die erste Steuereinrichtung 16 einen ersten Speicher 18 umfaßt und mit einer ersten Telekommunikationsschnittstelle 23 verbunden ist. Die erste Telekommunikationsverbindung 20 zwischen der ersten Telekommunikationsschnittstelle 23 und einer zweiten Telekommunikationsschnittstelle 27 umfaßt wenigstens einen ersten Signalisierungskanal 24, beispielsweise einen D-Kanal nach dem ISDN-Standard, und wenigstens einen ersten Nutzkanal 26, insbesondere ein B-Kanal nach dem ISDN-Standard. Die Telekommunikationszentrale 30 umfaßt zum einen die zweite Telekommunikationsschnittstelle 27 und eine erste Datenschnittstelle 43 und zum anderen eine zweite Steuereinrichtung 32, die mit der zweiten Telekommunikationsschnittstelle 27 und der ersten Datenschnittstelle 43 verbunden ist. Die zweite Steuereinrichtung 32 umfaßt eine Schnittstelleneinheit 34 und eine Vermittlungseinheit 36. Die erste Datenverarbeitungsanlage 50 umfaßt zum einen eine zweite Datenschnittstelle 47 und zum anderen eine zweite Eingabeeinrichtung 53 und eine zweite Ausgabeeinrichtung 54, die jeweils mit einer dritten Steuereinrichtung 56 verbunden sind, wobei die dritte Steuereinrichtung 56 einen zweiten Speicher 58 umfaßt und mit der zweiten Datenschnittstelle 47 verbunden ist.
Die erste Datenschnittstelle 43 ist mit der zweiten Datenschnittstelle 47 über die erste Datenverbindung 40 verbunden.

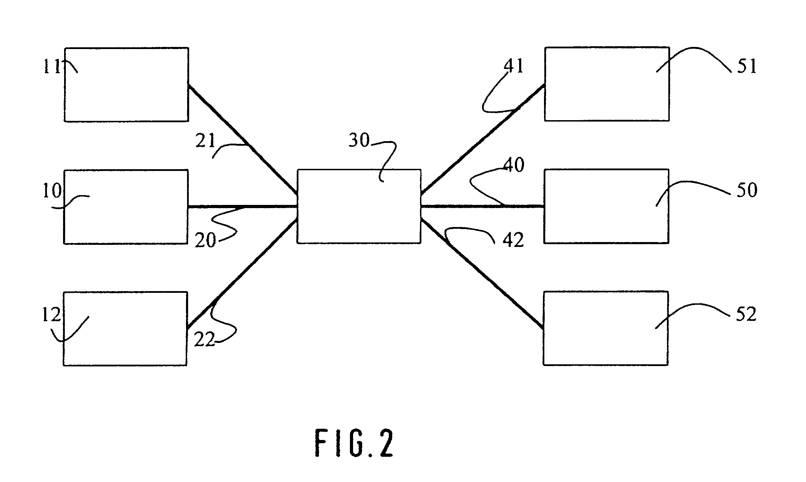

In Figur 2 ist ein Blockschaltbild eines Telekommunikationssystems dargestellt, das mit mehreren Telekommunikationsendgeräten 10, 11, 12 und wenigstens der ersten Datenverarbeitungsanlage 50 betreibbar ist. Optional können außer der ersten Datenverarbeitungsanlage 50 noch weitere Datenverarbeitungsanlagen, beispielsweise eine zweite Datenverarbeitungsanlage 51 und eine dritte Datenverarbeitungsanlage 52, mit der Telekommunikationszentrale 30 verbunden werden. Im Ausführungsbeispiel ist die zweite Datenverarbeitungsanlage 51 über eine zweite Datenverbindung 41 und die dritte Datenverarbeitungsanlage 52 über eine dritte Datenverbindung 42 mit der ersten Datenschnittstelle 43 der Telekommunikationszentrale 30 verbunden.
Weiterhin können an die Telekommunikationszentrale 30 eine Vielzahl von Telekommunikationsendgeräten 10, 11, 12 über Telekommunikationsverbindungen 20, 21, 22 angeschlossen werden. Stellvertretend hierfür sind in Figur 2 ein zweites Telekommunikationsendgerät 11 über eine zweite Telekommunikationsverbindung 21 und ein drittes Telekommunikationsendgerät 12 über eine dritte Telekommunikationsverbindung 22 mit der Telekommunikationszentrale 30 verbunden. Die zweite Telekommunikationsverbindung 21 umfaßt wenigstens einen zweiten Signalisierungskanal, insbesondere einen D-Kanal einer ISDN-Verbindung, und wenigstens einen zweiten Nutzkanal, insbesondere einen B-Kanal einer ISDN-Verbindung, und die dritte Kommunikationsverbindung 22 umfaßt wenigstens einen dritten Signalisierungskanal, insbesondere einen D-Kanal einer ISDN-Verbindung, und wenigstens einen dritten Nutzkanal, insbesondere einen B-Kanal einer ISDN-Verbindung. Die zweite Telekommunikationsverbindung 21 und die dritte Telekommunikationsverbindung 22 können das zweite Telekommunikationsendgerät 11 und das dritte Kommunikationsendgerät 12 zum einen über ein Telekommunikationsnetzwerk mit der Telekommunikationszentrale 30 verbinden, wobei die zweite Telekommunikationsverbindung 21 und die dritte Kommunikationsverbindung 22 die zwischengeschalteten Einrichtungen des Telekommunikationsnetzes, insbesondere Vermittlungsstellen und Nebenstellenanlagen, umfassen oder zum anderen analog zu der ersten Telekommunikationsverbindung 20 direkt mit der Telekommunikationszentrale 30 verbunden sein. In einer vorteilhaften Ausführungsform des Telekommunikationssystems ist die erste Telekommunikationsverbindung 20 ebenfalls über ein Telekommunikationsnetzwerk mit der Telekommunikationszentrale 30 verbunden, so daß in dieser Ausführungsform des Telekommunikationssystems die Telekommunikationsverbindungen 20, 21, 22 gleichermaßen sowohl über ein Telekommunikationsnetzwerk als auch direkt mit der Telekommunikationszentrale 30 verbunden sein können.

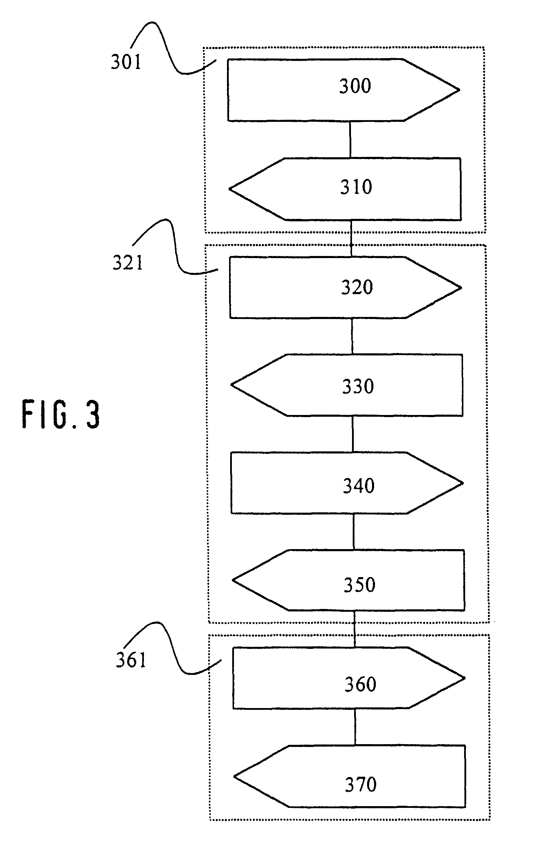

In Figur 3 ist der Verlauf der Kommunikation zwischen dem ersten Telekommunikationsendgerät 10 und der ersten Datenverarbeitungsanlage 50 dargestellt. Diese Kommunikation findet über den ersten Signalisierungskanal 24 in einer Anwendungsschicht des von der ITU (International Telecommunication Union) für offene Datenkommunikationssysteme definierten ISDN-Referenzmodells statt und ist am Beispiel einer Anwendung dargestellt, bei der vom ersten Telekommunikationsendgerät 10 aus eine Datenverarbeitungsfunktion, insbesondere zum Betrieb eines zentralen Telefonbuchs, an der ersten Datenverarbeitungsanlage 50 angefordert wird.
Wenn eine erste Verbindung aufgebaut werden soll, erfolgt die Kommunikation zwischen dem ersten Telekommunikationsendgerät 10 und der ersten Datenverarbeitungsanlage 50 über die Telekommunikationszentrale 30 in drei Schritten 301, 321, 361, wobei für einen Datenaustausch zwischen dem ersten Telekommunikationsendgerät 10 und der Telekommunikationszentrale 30 ausschließlich der erste Signalisierungskanal 24 benutzt wird.
Die erste Verbindung wird in einem ersten Schritt 301 aufgebaut.
Dazu sendet das erste Telekommunikationsendgerät 10 eine erste Anforderung 300, zum Verbindungsaufbau, an die erste Datenverarbeitungsanlage 50 über die Telekommunikationszentrale 30, und die erste Datenverarbeitungsanlage 50 sendet anschließend eine erste Bestätigung 310, zum Verbindungsaufbau, über die Telekommunikationszentrale 30 an das erste Telekommunikationsendgerät 10.
Die Verbindung wird in einem zweiten Schritt 321 zur Datenübertragung genutzt.
Dazu sendet das erste Telekommunikationsendgerät 10 eine erste Anfrage 320, insbesondere eine Anfrage zur Ausführung einer Datenverarbeitungsfunktion, beispielsweise zur Suche der ersten zehn aller im zentralen Telefonbuch vorhandenen Einträge zu einem vom Benutzer vorgegebenen Namen, an die erste Datenverarbeitungsanlage 50 und die erste Datenverarbeitungsanlage 50 sendet daraufhin ein erstes Ergebnis 330 der ersten Anfrage 320, beispielsweise die Liste der ersten zehn Einträge des Namens im zentralen Telefonbuch, an das erste Telekommunikationsendgerät 10. Es kann anschließend ein zusätzlicher Datenaustausch vorgesehen sein. Beispielsweise kann das erste Telekommunikationsendgerät 10 eine zweite Anfrage 330, insbesondere eine Anfrage zur Ausführung einer Datenverarbeitungsfunktion, beispielsweise zur Suche von weiteren der im zentralen Telefonbuch vorhandenen Einträge des Namens, an die erste Datenverarbeitungsanlage 50 senden, und die erste Datenverarbeitungsanlage 50 kann ein zweites Ergebnis 350 der zweiten Anfrage 340, beispielsweise eine Liste weiterer 10 Einträge des Namens im zentralen Telefonbuch, an das erste Telekommunikationsendgerät 10 senden.
Die Verbindung wird in einem dritten Schritt 361 beendet. Dazu sendet das erste Telekommunikationsendgerät 10 eine zweite Anforderung 360, zum Verbindungsabbau, über die Telekommunikationszentrale 30 an die erste Datenverarbeitungsanlage 50 und die erste Datenverarbeitungsanlage 50 sendet anschließend eine zweite Bestätigung 370, zum Verbindungsabbau, über die Telekommunikationszentrale 30 an das erste Telekommunikationsendgerät 10.

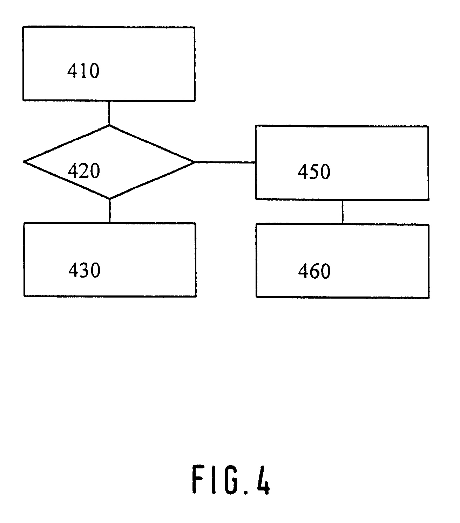

In Figur 4 ist beispielhaft die Funktionsweise der Telekommunikationszentrale 30 beim Aufbau von je einer Verbindung zwischen dem ersten Telekommunikationsendgerät 10 und der ersten Datenverarbeitungsanlage 50 und zwischen dem ersten Telekommunikationsendgerät 10 und dem zweiten Telekommunikationsendgerät 11 in einem Ablaufplan dargestellt.
Bei einem ersten Programmpunkt 410 wird die zweite Telekommunikationsschnittstelle 27 der Telekommunikationszentrale 30 beispielsweise vom ersten Telekommunikationsendgerät 10, insbesondere über den ersten Signalisierungskanal 24 angereizt, das erste Telekommunikationsendgerät 10 mit einer an die Telekommunikationszentrale 30 angeschlossenen ersten Datenverarbeitungsanlage 50 oder mit einem an die Telekommunikationszentrale 30 angeschlossenen zweiten Telekommunikationsendgerät 11 zu verbinden. Bei einem zweiten Programmpunkt 420 prüft die zweite Steuereinrichtung 32, ob es sich um einen Verbindungswunsch, insbesondere für eine Sprachdienstverbindung, zum zweiten Telekommunikationsendgerät 21 handelt oder ob es sich um die erste Anforderung 300 zum Aufbau einer transparenten Ende-zu-Ende-Verbindung mit der ersten Datenverarbeitungsanlage 50 handelt.
Handelt es sich um einen Verbindungswunsch, so wird zu einem dritten Programmpunkt 430 verzweigt. Handelt es sich um die erste Anforderung 300, so wird zu einem vierten Programmpunkt 450 verzweigt.
Beim dritten Programmpunkt 430 wird die Vermittlungseinheit 36 aktiviert, die als gerufenen Teilnehmer in diesem Beispiel das zweite Telekommunikationsendgerät 11 detektiert und eine zweite Verbindung zum zweiten Telekommunikationsendgerät 11 über die zweite Telekommunikationsverbindung 21 aufbaut, wobei wenigstens ein Nutzkanal 26 belegt wird. Die zweite Verbindung ist nun aktiv.
Beim vierten Programmpunkt 450 wird die Schnittstelleneinheit 34 aktiviert, die die erste Anforderung 300 zur Herstellung der ersten Verbindung in ein für die erste Datenschnittstelle 43 kompatibles Format umwandelt, so daß die erste Anforderung 300 für die erste Datenverarbeitungsanlage 50 lesbar ist. Die Schnittstelleneinheit 34 sendet die erste Anforderung 300 über die erste Datenverbindung 40 an die zweite Datenschnittstelle 47 der ersten Datenverarbeitungsanlage 50.
In einem fünften Programmpunkt 460 empfängt die Schnittstelleneinheit 34 die erste Bestätigung 310 über die erste Datenschnittstelle 43 von der ersten Datenverarbeitungsanlage 50. Die Schnittstelleneinheit 34 erkennt die erste Bestätigung 310 als zu der ersten Anforderung 300 zugehörig,setzt die erste Bestätigung 310 in ein für das erste Telekommunikationsendgerät 10 lesbares Format um und sendet die erste Bestätigung 310 ausschließlich über den ersten Signalisierungskanal 24 an das erste Telekommunikationsendgerät 10. Die erste Verbindung ist somit aktiv.

Im Beispiel liegt das zentrale Telefonbuch im zweiten Speicher 58 und kann dort zentral geändert und aktualisiert werden. Für die Anwendung "zentrales Telefonbuch" wird vom ersten Telekommunikationsendgerät 10 aus im zweiten Schritt 321 mittels der Anfragen 320, 340 auf der ersten Datenverarbeitungsanlage 50 wenigstens eine Datenverarbeitungsfunktion angereizt, die die Daten im zweiten Speicher 58 benutzt, um die Ergebnisse 330, 350 der Anfragen 320, 340 zu ermitteln. Die Ergebnisse 330, 350 werden von der ersten Datenverarbeitungsanlage 50 zum ersten Telekommunikationsendgerät 10 gesendet, wo die Ergebnisse 330, 350 im ersten Speicher 18 zur weiteren Verwendung gespeichert werden. Die im ersten Speicher 18 gespeicherten Daten können dauerhaft dort gespeichert bleiben und somit ein benutzerspezifisches, lokales Telefonbuch konstituieren, so daß oft angeforderte
Informationen nicht mehrfach übertragen werden müssen. Die Anforderung von Daten aus dem zentralen Telefonbuch auf der ersten Datenverarbeitungsanlage 50 kann wahlweise vom Benutzer aus initiiert werden oder aber automatisch geschehen, beispielsweise zur periodischen Aktualisierung von im lokalen Speicher 18 des ersten Telekommunikationsendgerätes 10 gespeicherten Daten.

In einer weiteren vorteilhaften Ausführungsform des erfindungsgemäßen Verfahrens, des erfindungsgemäßen ersten Telekommunikationsendgerätes 10 und der erfindungsgemäßen Telekommunikationszentrale 30 ist es darüberhinaus möglich, daß von der ersten Datenverarbeitungsanlage 50 aus für eine Anwendung eine Datenverarbeitungsfunktion auf dem ersten Telekommunikationsendgerät 10 angefordert werden kann. Die Kommunikation verläuft in diesem Fall symmetrisch zu der beschriebenen Kommunikation zwischen dem ersten Telekommunikationsendgerät 10 und der ersten Datenverarbeitungsanlage 50, lediglich mit dem Unterschied, daß ihre Rollen als Sender und Empfänger vertauscht sind.
Im ersten Schritt 301 der Kommunikation fordert folglich die erste Datenverarbeitungsanlage 50 das erste Telekommunikationsendgerät 10 mittels der ersten Aufforderung 300 auf, die erste Verbindung aufzubauen, was durch Absendung der ersten Bestätigung 310 des ersten Telekommunikationsendgerätes 10 vollzogen wird.
Im zweiten Schritt 321 findet die Datenübertragung zwischen beiden Geräten statt, die insbesondere zur Programmierung, zur Umprogrammierung zum Betrieb einer neuen Softwareversion oder auch zum Betrieb von Testfunktionen am ersten Telekommunikationsendgerät 10 dienen kann.
Im dritten Schritt 361 wird die erste Verbindung zwischen der ersten Datenverarbeitungsanlage 50 und dem ersten Telekommunikationsendgerät 10 beendet.
Aus den beiden Beispielen "zentrales Telefonbuch" und "Programmierung eines ersten Telekommunikationsendgerätes 10" zum Betrieb einer Anwendung geht zum einen hervor, daß das erfindungsgemäße Verfahren, das erfindungsgemäße erste Telekommunikationsendgerät 10 und die erfindungsgemäße Telekommunikationszentrale 30 es beliebigen Telekommunikationsendgeräten 10, 11, 12 ermöglicht, eine der ersten Verbindung entsprechende transparente Ende-zu-Ende-Verbindung zu wenigstens einer ersten Datenverarbeitungsanlage 50 über die Telekommunikationszentrale 30 anzureizen und eine Anwendung zu betreiben. Zum anderen geht aus den genannten Beispielen hervor, daß beliebige Telekommunikationsendgeräte 10, 11, 12 von einer ersten Datenverarbeitungsanlage 50 oder von mehreren Datenverarbeitungsanlagen 50, 51, 52 aus zum Aufbau einer der ersten Verbindung entsprechenden transparenten Ende-zu-Ende-Verbindung angereizt werden können, um eine Anwendung zu betreiben. Solche, der ersten Verbindung entsprechende Verbindungen zwischen beliebigen Telekommunikationsendgeräten 10, 11, 12 und beliebigen Datenverarbeitungsanlagen 50, 51, 52 belegen keine Nutzkanalressourcen auf den Telekommunikationsverbindungen 20, 21, 22. Darüberhinaus sind Verbindungen entsprechend der zweiten Verbidung zwischen verschiedenen Telekommunikationsendgeräten 10, 11, 12 untereinander über die Telekommunikationszentrale 30 möglich, wobei diese Verbindungen unter Belegung von Nutzkanalressourcen nutzbar sind.

Die erste Steuereinrichtung 16 steuert die Funktion der ersten Telekommunikationsschnittstelle 23, der ersten Eingabeeinrichtung 13 und der ersten Ausgabeeinrichtung 14. Die an der ersten Telekommunikationsschnittstelle 23 eingehenden Daten können von der ersten Steuereinrichtung 16 verarbeitet werden, insbesondere können sie in Programmdaten zur Steuerung des ersten Telekommunikationsendgerätes 10, beispielsweise zur Aktivierung von Funktionen, umgewandelt werden. Weiterhin können die an der ersten Telekommunikationsschnittstelle 23 eingehenden Daten einerseits im ersten Speicher 18 zur weiteren Verwendung, insbesondere zur Verarbeitung durch die erste Steuereinrichtung 16, gespeichert und andererseits von der ersten Ausgabeeinrichtung 14 direkt oder nach vorheriger Verarbeitung und/oder Speicherung ausgegeben werden.

Die dritte Steuereinrichtung 56 dient der Steuerung der Funktion der zweiten Datenschnittstelle 47, der zweiten Eingabeeinrichtung 53 und der zweiten Ausgabeeinrichtung 14.

Die zweite Steuereinrichtung 32 aktiviert in Abhängigkeit der an der ersten Telekommunikationsschnittstelle 27 bzw. der ersten Datenschnittstelle 43 empfangenen Daten die Schnittstelleneinheit 34 und die Vermittlungseinheit 36. Zur Verdeutlichung der Erfindung soll hier beispielhaft der Fall betrachtet werden, daß zunächst zwischen dem ersten Telekommunikationsendgerät 10 und dem zweiten Telekommunikationsendgerät 11 eine zweite Verbindung aufgebaut werden soll. Eines der Telekommunikationsendgeräte, beispielsweise das erste Telekommunikationsendgerät 10, sendet einen Verbindungswunsch, insbesondere einen Verbindungswunsch für eine Sprachdienstverbindung, an die Telekommunikationszentrale 30, die den Verbindungswunsch entsprechend des ersten Programmpunktes 410 an der zweiten Telekommunikationsschnittstelle 27 empfängt. Die zweite Steuereinheit 32 erkennt entsprechend des zweiten Programmpunktes 420 den Verbindungswunsch und aktiviert entsprechend des dritten Programmpunktes 430 die Vermittlungseinheit 36, die ihrerseits die zweite Verbindung zum zweiten Telekommunikationsendgerät 11 aufbaut. Diese zweite Verbindung bleibt nun über die Telekommunikationszentrale 30 aufgebaut und belegt wenigstens einen ersten Nutzkanal 26.
Wird während dieser zweiten Verbindung vom ersten Telekommunikationsendgerät 10 eine Anwendung von der ersten Datenverarbeitungsanlage 50 angefordert, so sendet das erste Telekommunikationsendgerät 10 die erste Anforderung 300 an die erste Datenverarbeitungsanlage 50 über die Telekommunikationszentrale 30, wobei lediglich der erste Signalisierungskanal 24 benutzt wird. Die an der zweiten Telekommunikationsschnittstelle 27 entsprechend dem ersten Programmpunkt 410 empfangene erste Anforderung 300 wird von der Steuereinrichtung 32 der Telekommunikationszentrale 30 entsprechend dem zweiten Programmpunkt 420 als Anforderung zum Verbindungsaufbau mit der ersten Datenverarbeitungsanlage 50 erkannt und die zweite Steuereinrichtung 32 aktiviert entsprechend dem vierten Programmpunkt 450 die Schnittstelleneinheit 34. Die Schnittstelleneinheit 34 setzt die erste Anforderung 300 in ein für die erste Datenschnittstelle 43 kompatibles Format um, so daß die erste Anforderung 300 für die erste Datenverarbeitungsanlage 50 lesbar ist, und sendet die erste Anforderung 300 über die erste Datenverbindung 40 an die zweite Datenschnittstelle 47 der ersten Datenverarbeitungsanlage 50, die die erste Anforderung 300 verarbeitet und eine erste Bestätigung 310 über die erste Datenverbindung 40 an die Schnittstelleneinheit 34 zurücksendet. Die Schnittstelleneinheit 34 erkennt die erste Bestätigung 310 als zur ersten Anforderung 300 gehörig, setzt entsprechend des fünften Programmpunktes 460 die erste Bestätigung 310 in ein für das erste Telekommunikationsendgerät 10 lesbares Format um und sendet sie über die erste Telekommunikationsverbindung 20 an das erste Telekommunikationsendgerät 10, wobei ausschließlich der erste Signalisierungskanal 24 benutzt wird.
Zwischen den Kommunikationspartnern "erstes Telekommunikationsendgerät 10" und "erste Datenverarbeitungsanlage 50" besteht nunmehr eine erste, transparente Ende-zu-Ende-Verbindung zur Datenübertragung über die Telekommunikationszentrale 30, wobei die übertragenen Daten, beispielsweise die Anfragen 320, 340, die Ergebnisse 330, 350, in der Telekommunikationszentrale 30 lediglich einer Formatumwandlung in der Schnittstelleneinheit 34 unterzogen und analog zu der ersten Anforderung 300 und der ersten Bestätigung 310 behandelt werden.
Für die erste Datenschnittstelle 43 und die zweite Datenschnittstelle 47 zwischen der Telekommunikationszentrale 30 und der ersten Datenverarbeitungsanlage 50 können beliebige Schnittstellentypen vorgesehen sein, insbesondere ISDN-Schnittstelle, V-Schnittstelle oder CTI-Link (CSTA).

## Patentansprüche

1. Verfahren zur bidirektionalen Übertragung von Daten auf einer Übertragungsstrecke (20, 23, 27, 40, 43, 47) zwischen wenigstens einem Telekommunikationsendgerät (10) und wenigstens einer ersten Datenverarbeitungsanlage (50) über eine Telekommunikationszentrale (30) zum Betrieb von wenigstens einer Anwendung, wobei auf einem Abschnitt (20, 23, 27) der Übertragungsstrecke(20, 23, 27, 40, 43, 47), zwischen dem wenigstens einen ersten Telekommunikationsendgerät (10) und der Telekommunikationszentrale (30), wenigstens ein Signalisierungskanal (24), insbesondere ein D-Kanal einer ISDN-Schnittstelle, betrieben wird, **dadurch gekennzeichnet,** daß die Daten zum Betrieb der wenigstens einen Anwendung auf dem Abschnitt (20, 23, 27) der Übertragungsstrecke (20, 23, 27, 40, 43, 47) ausschließlich über den wenigstens einen Signalisierungskanal (24) übertragen werden.

2. Verfahren nach Patentanspruch 1, **dadurch gekennzeichnet,** daß die zwischen dem wenigstens einen Telekommunikationsendgerät (10) und der Telekommunikationszentrale (30) übertragbaren Daten in einem ersten, von dem wenigstens einen Telekommunikationsendgerät (10) lesbaren Format übertragen werden und daß die zwischen der Telekommunikationszentrale (30) und der wenigstens einen ersten Datenverarbeitungsanlage (50) übertragbaren Daten in einem zweiten, von der wenigstens einen ersten Datenverarbeitungsanlage (50) lesbaren Format übertragen werden, wobei die Telekommunikationszentrale (30) während der Übertragung der Daten, ausschließlich eine Umwandlung zwischen den beiden Formaten durchführt.

3. Verfahren nach einem der Patentansprüche 1 oder 2, **dadurch gekennzeichnet,** daß mittels der Übertragung der Daten, ausgehend von dem wenigstens einen Telekommunikationsendgerät (10), eine Datenverarbeitungsfunktion der auf der wenigstens einen ersten Datenverarbeitungsanlage (50) betreibbaren Anwendung, insbesondere einer Auskunftsanwendung für ein zentrales Telefonbuch, angefordert wird.

4. Verfahren nach einem der vorangehenden Patentansprüche, **dadurch gekennzeichnet**, daß die von der wenigstens einen ersten Datenverarbeitungsanlage (50) übertragenen Daten am Telekommunikationsendgerät (10) empfangbar sind, daß in Abhängigkeit der empfangenen Daten Programmdaten erzeugbar sind und daß die Programmdaten speicherbar sind, so daß bei einem Aufruf der Programmdaten eine Funktion am Telekommunikationsendgerät (10) aktivierbar ist.

5. Telekommunikationsendgerät (10) mit einer ersten Telekommunikationsschnittstelle (23), insbesondere ISDN-Schnittstelle, zum Anschluß an ein Telekommunikationsnetz zum Betrieb von wenigstens einer Anwendung mittels wenigstens einer ersten Datenverarbeitungsanlage (50), wobei die erste Telekommunikationsschnittstelle (23) wenigstens einen Signalisierungskanal (24), insbesondere einen D-Kanal, umfaßt, **dadurch gekennzeichnet**, daß das Telekommunikationsendgerät (10) Mittel aufweist, Daten zum Betrieb der wenigstens einen Anwendung ausschließlich über den wenigstens einen Signalisierungskanal (24) an die erste Datenverarbeitungsanlage (50), vorzugsweise über eine Telekommunikationszentrale (30), zu übertragen.

6. Telekommunikationsendgerät (10) nach Patentanspruch 5, **dadurch gekennzeichnet,** daß zum Betrieb der wenigstens einen Anwendung wenigstens ein Signal an der ersten Telekommunikationsschnittstelle (23) sendbar und empfangbar ist.

7. Telekommunikationsendgerät (10) nach Patentanspruch 5 oder 6, **dadurch gekennzeichnet,** daß das Telekommunikationsendgerät Mittel aufweist, während der Übertragung der Daten wenigstens eine Datenverarbeitungsfunktion (320, 330, 340, 350) der auf der wenigstens einen ersten Datenverarbeitungsanlage (50) betreibbaren Anwendung, insbesondere einer Auskunftsanwendung für ein zentrales Telefonbuch, anzufordern.

8. Telekommunikationsendgerät (10) nach Patentanspruch 5, 6 oder 7, **dadurch gekennzeichnet,** das Telekommunikationsendgerät (10) Mittel aufweist, am Telekommunikationsendgerät (10) Daten von der wenigstens einen ersten Datenverarbeitungsanlage (50) zu empfangen, in Abhängigkeit der empfangenen Daten Programmdaten zu erzeugen, die Programmdaten abzuspeichern und bei einem Aufruf der Programmdaten eine Funktion am Telekommunikationsendgerät (10) zu aktivieren.

9. Telekommunikationszentrale (30), insbesondere Nebenstellenanlage, mit wenigstens einer zweiten Telekommunikationsschnittstelle (28), insbesondere ISDN-Schnittstelle, zum Anschluß wenigstens eines Telekommunikationsendgerätes (10), wobei die wenigstens eine zweite Telekommunikationsschnittstelle (28) wenigstens einen Signalisierungskanal (24), insbesondere einen D-Kanal, umfaßt, wobei die Telekommunikationszentrale (30) eine erste Datenschnittstelle (42) zu wenigstens einer ersten Datenverarbeitungsanlage (50) umfaßt und wobei Daten zum Betrieb von wenigstens einer Anwendung zwischen dem wenigstens einen Telekommunikationsendgerät (10) und der wenigstens einen ersten Datenverarbeitungsanlage (50) über die Telekommunikationszentrale (30) übertragbar sind, **dadurch gekennzeichnet,** daß die Telekommunikationszentrale (30) Mittel aufweist, die Daten zwischen dem wenigstens einen Telekommunikationsendgerät (10) und der Telekommunikationszentrale (30) zum Betrieb der wenigstens einen Anwendung ausschließlich über den wenigstens einen Signalisierungskanal (24) zu übertragen.

10. Telekommunikationszentrale (30) nach Patentanspruch 9, **dadurch gekennzeichnet,** daß die Telekommunikationszentrale (30) zum einen Mittel aufweist, in Abhängigkeit von an der zweiten Telekommunikationsschnittstelle (28) empfangenen ersten Daten zweite Daten zu erzeugen und die zweiten Daten von der ersten Datenschnittstelle (42) zu der wenigstens einen ersten Datenverarbeitungsanlage (50) zu senden und zum anderen Mittel aufweist, während der Datenübertragung in Abhängigkeit von an der ersten Datenschnittstelle (42) empfangenen dritten Daten vierte Daten zu erzeugen und die vierten Daten von der zweiten Telekommunikationsschnittstelle (28) zu dem wenigstens einen Telekommunikationsendgerät (10) zu senden.

11. Telekommunikationszentrale (30) nach Patentanspruch 9 oder 10, **dadurch gekennzeichnet,** daß die Telekommunikationszentrale (30) eine Steuereinheit (32) umfaßt und daß die Steuereinheit (32) Mittel, insbesondere eine Schnittstelleneinheit (34), aufweist, die die zweiten Daten aus den ersten Daten ausschließlich durch Formatumwandlung erzeugen und/oder die die vierten Daten ausschließlich durch Formatumwandlung aus den dritten Daten zu erzeugen.
